# DEMANDE DE BREVET EUROPEEN

(11) **EP 4 835 419 A1**
(43) Date de publication de la demande: **04.11.2026**
(21) Numéro de dépôt: 26172840.6
(22) Date de dépôt: 16.04.2026
(51) Int. Cl.: G01J 9/02, G01J 11/00

(54) **DISPOSITIF DE CARACTERISATION DES MODULATIONS TEMPORELLES D'UNE SOURCE LASER**

(30) Priorité: 30.04.2025 FR 2504598
(71) Demandeur: Commissariat à l'Energie Atomique et aux Energies Alternatives, 75015 Paris (FR)
(72) Inventeur: MARION, Denis, 33116 Le Barp Cedex (FR)
(74) Mandataire: Atout PI Laplace

(57) **Abrégé**

L'invention concerne un dispositif (10) de caractérisation des modulations temporelles d'une intensité (I(t)) provenant d'une source laser (LS), comprenant :
- un interféromètre (INT)
- un premier photodétecteur (PD1) et un deuxième détecteur (PD2) couplé à la sortie cosinus (Ocos) dudit combineur, générant respectivement un signal de sortie sinus (Ssin) et un signal de sortie cosinus (Scos), le premier et deuxième détecteurs étant configurés de manière à générer un signal de sortie (S1Dout) à partir d'une différence entre le signal de sortie sinus (Ssin) et le signal de sortie cosinus (Scos), le signal de sortie (S1 Dout) étant fonction de ladite phase non linéaire (Δφ₁₂),
- une unité de traitement (UT) configurée pour déterminer une fonction de distribution (p(i)) desdites modulations d'intensité de ladite source laser à partir dudit signal de sortie (S1 Dout), déterminé pour une pluralité d'intensités moyennes de la dite source laser ou pour une pluralité de valeurs du premier et du deuxième gain, le premier et le deuxième gain variant selon un même facteur multiplicatif.

## Description

### DOMAINE DE L'INVENTION

La présente invention concerne la caractérisation des modulations temporelles d'une source laser. Plus précisément l'invention concerne un dispositif de caractérisation des modulations temporelles d'une source laser à l'aide d'un interféromètre.

### ETAT DE LA TECHNIQUE

L'analyse des modulations temporelles des lasers est nécessaire dans de nombreux domaines utilisant ces derniers. Notamment, elle est importante pour les lasers à très forte énergie travaillant non loin du seuil d'endommagement des matériaux optiques. Ces modulations peuvent en effet entraîner un endommagement qui se propagera ensuite tout au long de la vie de l'optique. Ces modulations ont une durée caractéristique inversement proportionnelle à la largeur du spectre du laser. Elles peuvent être évaluées par modélisation, par mesure temporelle directe ou au moyen de techniques non-linéaires comme la focalisation temporelle.

La mesure temporelle directe des modulations est souvent fortement limitée par le temps de réponse de la chaîne de mesure électronique. Les oscilloscopes et photodiodes modernes ont des bandes passantes de l'ordre de 40 GHz, permettant des temps de montée de l'ordre de la dizaine de picosecondes, alors que les modulations peuvent avoir des durées largement inférieures à la picoseconde.

Les expériences de lentille temporelle permettent d'élargir temporellement les modulations jusqu'à des durées mesurables, mais elles souffrent d'une grande complexité de mise en œuvre expérimentale, et d'une dynamique de mesure limitée. Ces expériences n'ont pour l'instant pas dépassé le cadre du laboratoire académique.

Il existe un besoin de caractérisation de ces modulations temporelles à l'aide d'un dispositif simplifié et permettant la mesure de modulations temporelles de durée caractéristique inférieure au temps de réponse des photodétecteurs de l'état de l'art.

Un but de la présente invention est de remédier aux inconvénients précités en proposant un dispositif de caractérisation des modulations temporelles d'une source laser utilisant un interféromètre.

### DESCRIPTION DE L'INVENTION

La présente invention a pour objet un dispositif de caractérisation des modulations temporelles d'une intensité provenant d'une source laser selon une première variante, comprenant :
- un interféromètre comprenant :
   - un séparateur,
   - un premier bras comprenant un premier milieu non linéaire et un deuxième bras comprenant un deuxième milieu non linéaire,
   le premier bras comprenant un premier amplificateur ou atténuateur présentant un premier gain et le deuxième bras comprenant un deuxième amplificateur ou atténuateur présentant un deuxième gain, le premier et le deuxième amplificateurs ou atténuateurs étant agencés de sorte qu'une première intensité incidente sur le premier milieu non linéaire est différente d'une deuxième intensité incidente sur le deuxième milieu non linéaire, de manière à générer une première phase non linéaire différente d'une deuxième phase non linéaire, une différence entre la deuxième phase non linéaire et la première phase non linéaire étant dénommée phase non linéaire dudit interféromètre,
   - un combineur configuré pour superposer un premier faisceau lumineux issu du premier bras et un deuxième faisceau lumineux issu du deuxième bras et comprenant deux sorties, une sortie dénommée sortie sinus et une sortie dénommée sortie cosinus,
- un premier photodétecteur couplé à la sortie sinus dudit combineur et un deuxième détecteur couplé à la sortie cosinus dudit combineur, générant respectivement un signal de sortie sinus et un signal de sortie cosinus, le premier et deuxième détecteurs étant configurés de manière à générer un signal de sortie à partir d'une différence entre le signal de sortie sinus et le signal de sortie cosinus, le signal de sortie étant fonction de ladite phase non linéaire,
- une unité de traitement configurée pour déterminer une fonction de distribution desdites modulations d'intensité de ladite source laser à partir dudit signal de sortie, déterminé pour une pluralité d'intensités moyennes de la dite source laser ou pour une pluralité de valeurs du premier et du deuxième gain, le premier et le deuxième gain variant selon un même facteur multiplicatif.

L'invention a également pour objet un dispositif de caractérisation des modulations temporelles d'une intensité provenant d'une source laser selon une deuxième variante, comprenant :
- un interféromètre comprenant :
   - un séparateur,
   - un premier bras comprenant un premier milieu non linéaire et un deuxième bras comprenant un deuxième milieu non linéaire,
   le premier bras comprenant un premier amplificateur ou atténuateur présentant un premier gain et le deuxième bras comprenant un deuxième amplificateur ou atténuateur présentant un deuxième gain, le premier et le deuxième amplificateurs ou atténuateurs étant agencés de sorte qu'une première intensité incidente sur le premier milieu non linéaire est différente d'une deuxième intensité incidente sur le deuxième milieu non linéaire, de manière à générer une première phase non linéaire différente d'une deuxième phase non linéaire, une différence entre la deuxième phase non linéaire et la première phase non linéaire étant dénommée phase non linéaire dudit interféromètre,
   - un combineur configuré pour superposer un premier faisceau lumineux issu du premier bras et un deuxième faisceau lumineux issu du deuxième bras et comprenant deux sorties, une sortie dénommée sortie sinus et une sortie dénommée sortie cosinus,
- un photodétecteur PD couplé à une sortie choisie parmi la sortie sinus ou la sortie cosinus, et configuré pour générer un signal de sortie fonction de ladite phase non linéaire,
- une unité de traitement configurée pour déterminer une fonction de distribution desdites modulations d'intensité de ladite source laser à partir dudit signal de sortie déterminé pour une pluralité d'intensités moyennes de la dite source laser ou pour une pluralité de valeurs du premier et du deuxième gain, le premier et le deuxième gain variant selon un même facteur multiplicatif.

Selon un mode de réalisation l'intensité I(t) à caractériser s'écrit : $I \left(t\right) = {\left〈I\right〉}_{t} . i \left(t\right)$ avec <I>t intensité moyenne de la source, constante dans le temps et i(t) variable aléatoire sans dimension, et l'unité de traitement est configurée pour :
- déterminer une fonction associant à un paramètre α, fonction des différentes valeurs d'intensités moyennes ou de gains, une valeur déterminée à partir du signal de sortie associé, et
- déterminer, à partir des valeurs de ladite fonction obtenues pour une pluralité de valeurs de α, une grandeur p(i), densité de probabilité de la variable aléatoire i.

Selon un mode de réalisation le paramètre α est égal à : $α = \left({C}_{NL}/2.π\right) . {\left〈I\right〉}_{t}$ avec Δφ₁₂ = C_{NL}.I(t) et Δφ₁₂ phase non linéaire de l'interféromètre.

Selon un mode de réalisation l'interféromètre est de type fibré, le premier et le deuxième milieu non linéaires sont respectivement une première et une deuxième fibre optique non linéaire, lesdites première et deuxième phase non linéaires étant générées par effet Kerr.

Selon un mode de réalisation la première et la deuxième fibre optique non linéaire sont identiques, le premier gain et le deuxième gain sont identiques, et on a : ${C}_{NL} = \left[π.\left(g-1\right){n}_{2}.l\right] / {λ}_{0}$ avec g gain, n₂ indice non linéaire de chacune des fibres optiques et *l* longueur de chacune des fibres optiques.

Selon un mode de réalisation le séparateur, le premier et le deuxième gain sont déterminés de sorte qu'une première intensité lumineuse en sortie du premier bras et une deuxième intensité lumineuse en sortie du deuxième bras présentent une amplitude identique.

Selon un mode de réalisation séparateur est de type 50/50 et le premier et le deuxième gain sont sensiblement identiques.

Selon un mode de réalisation lequel un chemin optique du premier bras et égal à un chemin optique du deuxième bras.

Selon un mode de réalisation lequel au moins un des deux bras comprend une ligne à retard.

Selon un mode de réalisation l'interféromètre est de type Mach-Zender ou de type Sagnac.

Selon un mode de réalisation chaque bras comprend un correcteur de dispersion.

Un autre objet de l'invention est une méthode de caractérisation des modulations temporelles d'une intensité provenant d'une source laser selon une première variante, ladite méthode utilisant un interféromètre comprenant :
- un séparateur,
- un premier bras comprenant un premier milieu non linéaire et un deuxième bras comprenant un deuxième milieu non linéaire,
le premier bras comprenant un premier amplificateur ou atténuateur présentant un premier gain et le deuxième bras comprenant un deuxième amplificateur ou atténuateur présentant un deuxième gain, le premier et le deuxième amplificateurs ou atténuateurs étant agencés de sorte qu'une première intensité incidente sur le premier milieu non linéaire est différente d'une deuxième intensité incidente sur le deuxième milieu non linéaire, de manière à générer une première phase non linéaire différente d'une deuxième phase non linéaire, une différence entre la deuxième phase non linéaire et la première phase non linéaire étant dénommée phase non linéaire dudit interféromètre,
- un combineur configuré pour superposer un premier faisceau lumineux issu du premier bras et un deuxième faisceau lumineux issu du deuxième bras et comprenant deux sorties, une sortie dénommée sortie sinus et une sortie dénommée sortie cosinus,
ladite méthode comprenant les étapes consistant à :
- Générer un faisceau incident présentant l'intensité à caractériser,
- Injecter ledit faisceau incident dans l'interféromètre,
- Détecter un signal de sortie sinus et un signal de sortie cosinus et générer un signal de sortie à partir d'une différence entre le signal de sortie sinus (Ssin) et le signal de sortie cosinus, le signal de sortie étant fonction de ladite phase non linéaire,
- Déterminer une fonction de distribution desdites modulations d'intensité de ladite source laser à partir dudit signal de sortie déterminé pour une pluralité d'intensités moyennes de la dite source laser ou pour une pluralité de valeurs du premier et du deuxième gain, le premier et le deuxième gain variant selon un même facteur multiplicatif.

Un autre objet de l'invention est une méthode de caractérisation des modulations temporelles d'une intensité provenant d'une source laser, ladite méthode utilisant un interféromètre comprenant :
- un séparateur,
- un premier bras comprenant un premier milieu non linéaire et un deuxième bras comprenant un deuxième milieu non linéaire,
le premier bras comprenant un premier amplificateur ou atténuateur présentant un premier gain et le deuxième bras comprenant un deuxième amplificateur ou atténuateur présentant un deuxième gain, le premier et le deuxième amplificateurs ou atténuateurs étant agencés de sorte qu'une première intensité incidente sur le premier milieu non linéaire est différente d'une deuxième intensité incidente sur le deuxième milieu non linéaire, de manière à générer une première phase non linéaire différente d'une deuxième phase non linéaire, une différence entre la deuxième phase non linéaire et la première phase non linéaire étant dénommée phase non linéaire dudit interféromètre,
- un combineur configuré pour superposer un premier faisceau lumineux issu du premier bras et un deuxième faisceau lumineux issu du deuxième bras et comprenant deux sorties, une sortie dénommée sortie sinus et une sortie dénommée sortie cosinus (Ocos),
ladite méthode comprenant les étapes consistant à :
- Générer un faisceau incident présentant l'intensité à caractériser,
- Injecter ledit faisceau incident dans ledit interféromètre,
- Détecter, à une sortie dudit interféromètre choisie parmi la sortie sinus ou la sortie cosinus, un signal de sortie fonction de ladite phase non linéaire,
- Déterminer une fonction de distribution desdites modulations d'intensité de ladite source laser à partir dudit signal de sortie déterminé pour une pluralité d'intensités moyennes de la dite source laser ou pour une pluralité de valeurs du premier et du deuxième gain, le premier et le deuxième gain variant selon un même facteur multiplicatif.

Selon un mode de réalisation des deux variantes l'intensité I(t) à caractériser s'écrit :$l \left(t\right) = {\left〈l\right〉}_{t} . i \left(t\right)$ avec <I>ₜ intensité moyenne de la source, constante dans le temps, i(t) variable aléatoire sans dimension, et l'étape de détermination de ladite fonction de distribution comprend les sous étapes consistant à :
- déterminer une fonction associant à un paramètre α, fonction des différentes valeurs d'intensités moyennes ou de gains, une valeur déterminée à partir du signal de sortie associé, et
- déterminer, à partir des valeurs de ladite fonction obtenues pour une pluralité de valeurs de α, une grandeur p(i), densité de probabilité de la variable aléatoire i.

La description suivante présente plusieurs exemples de réalisation du dispositif de l'invention: ces exemples sont non limitatifs de la portée de l'invention. Ces exemples de réalisation présentent à la fois les caractéristiques essentielles de l'invention ainsi que des caractéristiques additionnelles liées aux modes de réalisation considérés.

L'invention sera mieux comprise et d'autres caractéristiques, buts et avantages de celle-ci apparaîtront au cours de la description détaillée qui va suivre et en regard des dessins annexés donnés à titre d'exemples non limitatifs et sur lesquels :
La figure 1 illustre un exemple de dispositif selon l'invention selon une première variante comprenant deux photodétecteurs.
La figure 2 illustre un exemple de dispositif selon l'invention selon une deuxième variante comprenant un photodétecteur.
La figure 3 illustre un exemple d'implémentation d'un dispositif selon la première variante de l'invention avec des fibres optiques.

### DESCRIPTION DETAILLEE DE L'INVENTION

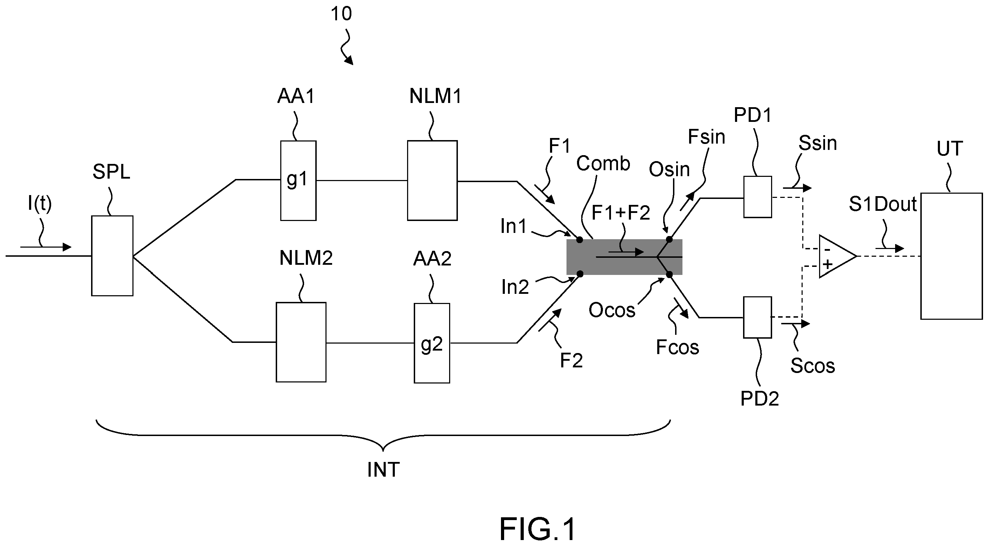

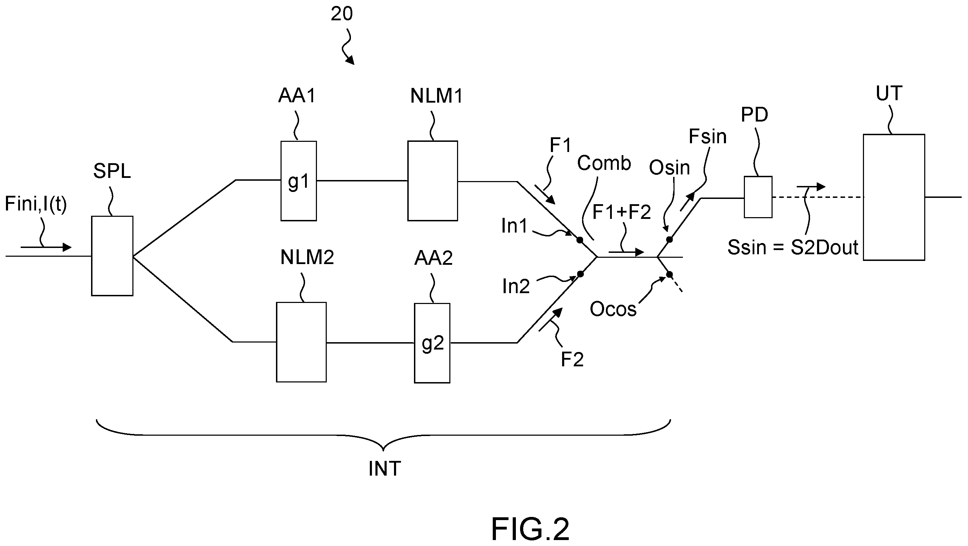

Les figures 1 et 2 illustrent respectivement un exemple de dispositif de caractérisation 10 selon l'invention selon une première variante, et un exemple de dispositif de caractérisation 20 selon l'invention selon une deuxième variante.

Le dispositif selon l'invention caractérise les modulations temporelles de l'intensité I(t) d'un faisceau Fini provenant d'une source laser LS.

Les dispositifs 10 et 20 selon l'invention comprennent un interféromètre INT. L'interféromètre INT comprend un séparateur SPL, un premier bras comprenant un premier milieu non linéaire NLM1 et un deuxième bras comprenant un deuxième milieu non linéaire NLM2. Le séparateur comprend ainsi 3 ports : un port d'entrée dans lequel on injecte le faisceau lumineux initial Fini d'intensité I(t) à caractériser, et deux ports de sortie pour former le premier et le deuxième bras de l'interféromètre.

Le premier bras comprend un premier amplificateur ou atténuateur AA1 présentant un premier gain g1 et le deuxième bras comprend un deuxième amplificateur ou atténuateur AA2 présentant un deuxième gain g2, le premier et le deuxième amplificateurs ou atténuateurs étant agencés de sorte qu'une intensité incidente sur le premier milieu non linéaire est différente d'une intensité incidente sur le deuxième milieu non linéaire. Les intensités traversant les deux bras sont ainsi déséquilibrées par la présence des amplificateurs/atténuateurs AA1 et AA2. Ceci est obtenu en positionnant l'un des amplificateurs/atténuateurs en amont du milieu non linéaire associé (AA1 en amont de NLM1 dans l'exemple des figures 1 et 2) et en positionnant l'autre amplificateur/atténuateur en aval du milieu non linéaire associé (AA2 en aval de NLM2 dans l'exemple des figures 1 et 2).

Cette différence d'intensité incidente sur les deux milieux non linéaires génère une première phase non linéaire φ_{NL1} différente d'une deuxième phase non linéaire φ_{NL2}. On dénomme par la suite phase non linéaire Δφ₁₂ de l'interféromètre INT la différence entre la deuxième phase non linéaire φ_{NL2} et la première phase non linéaire φ_{NL1} :
${Δφ}_{12} = {φ}_{NL 2} - {φ}_{NL 1}$

L'interféromètre INT comprend également un combineur Comb configuré pour superposer un premier faisceau lumineux F1 issu du premier bras et un deuxième faisceau lumineux F2 issu du deuxième bras. Le combineur Comb comprend donc deux ports d'entrée In1 et In2 par lesquels entrent les faisceaux F1 et F2 issus des deux bras de l'interféromètre.

Les deux faisceaux F1 et F2 interfèrent dans le combineur, et l'interférence résultante est fonction de la phase non linéaire de l'interféromètre.

Le combineur comprend également deux sorties, une sortie dénommée sortie sinus Osin et une sortie dénommée sortie cosinus Ocos, et le combineur répartit le faisceau résultant des interférences selon ces deux sorties, fonction respectivement de la composante en sinus et à la composante en cosinus de l'interférence. Un tel combineur est connu de l'homme de l'art.

Le déphasage nonlinéaire dépend de l'intensité I(t) de la source, qui est ainsi imprimé dans l'interférence entre F1 et F2 et dans les deux faisceaux Fsin et Fcos destinés à sortir par les sorties Ocos et Osin du combineur Comb.

Préférentiellement, pour simplifier les calculs de manière non limitative, le séparateur SPL, le premier gain g1 et le deuxième gain g2 sont déterminés de sorte que la première intensité lumineuse I1 en sortie du premier bras et la deuxième intensité lumineuse I2 en sortie du deuxième bras présentent une amplitude identique, soit que :
$k . g 1 = \left(1-k\right) . g 2 = g / 2$
avec k représentant la fraction de I(t) dirigée vers le premier bras.

Par exemple le séparateur SPL est de type 50/50 (k=0.5) et g1 = g2 = g.

Soit Is(t) l'intensité du faisceau Fsin à la sortie Osin et Ic(t) l'intensité du faisceau Fcos à la sortie Ocos, on a:
$\begin{matrix}{I}_{s} \left(t\right) = gI \left(t\right) {sin}^{2} \frac{Δ {φ}_{12}}{2} , \\ {I}_{c} \left(t\right) = gI \left(t\right) {cos}^{2} \frac{Δ {φ}_{12}}{2} ,\end{matrix}$ (1)

Pour un bon fonctionnement de l'interféromètre non linéaire préférentiellement le chemin optique du premier bras et égal au chemin optique du deuxième bras. Cette condition est classiquement dénommée « zero-delay » ou délai nul et connue de l'homme de l'art. Elle permet d'égaler les termes linéaires de la phase. Typiquement cette condition peut être obtenue avec une ligne à retard DL sur au moins un des deux bras.

Il est possible de tolérer un nombre limité de périodes (entières) entre les deux bras, tant que le temps total de retard reste négligeable devant le temps de cohérence de la source.

Préférentiellement il convient d'isoler acoustiquement l'interféromètre et de veiller à ce qu'il soit stabilisé en température. Cela permet de vérifier la condition du délai nul aux basses fréquences (asservissement thermique) comme aux hautes fréquences (asservissement acoustique).

On remarque bien que les intensités Is et Ic des faisceaux Fsin (sortie Osin) et Fcos (sortie Ocos) sont fonction respectivement du sinus et du cosinus de la phase non linéaire Δφ₁₂.

Le combineur Comb comprend ainsi 4 ports : deux ports d'entrée par lesquels entrent les faisceaux F1 et F2 issus des deux bras de l'interféromètre, et deux ports de sorties, un port Osin par lequel sort un faisceau Fsin fonction du sinus de la phase non linéaire de l'interféromètre, et un port Ocos par lequel sort un faisceau Fcos fonction du cosinus de la phase non linéaire.

Le dispositif 10 selon la première variante de l'invention comprend, comme illustré figure 1, un premier photodétecteur PD1 couplé à la sortie sinus Osin du combineur et un deuxième détecteur PD2 couplé à la sortie cosinus Ocos du combineur, générant respectivement un signal de sortie sinus Ssin et un signal de sortie cosinus Scos. Préférentiellement le premier détecteur PD1 et deuxième détecteur PD2 sont équilibrés. Cela signifie que leur facteur de mérite courant/éclairement (respectivement K1 et K2) est sensiblement égal (par exemple les deux détecteurs sont identiques). Les deux détecteurs sont connectés à un amplificateur, et configurés de manière à générer un signal de sortie S1 Dout à partir de la différence entre le signal de sortie cosinus Scos et le signal de sortie sinus Ssin (ou l'opposé).

Le signal de sortie S2Dout porte une information sur la phase non linéaire Δφ₁₂.

L'utilisation de deux photodétecteurs équilibrés est connue de l'homme de l'art.

Typiquement les photodétecteurs sont des photodiodes.

Le dispositif 20 selon la deuxième variante de l'invention comprend, comme illustré figure 2, un photodétecteur PD couplé à une sortie choisie parmi la sortie sinus ou la sortie cosinus, et configuré pour générer un signal de sortie S2Dout fonction de la phase non linéaire Δφ₁₂. Le signal S2Dout porte ainsi une information sur cette phase non linéaire. Dans l'exemple non limitatif de la figure 2 le photodétecteur PD est couplé à la sortie Osin.

Le calcul permettant la détermination de la fonction de distribution à partir du signal S1Dout est développé ci-après. Un calcul de même type peut être réalisé à partir du signal S2out (également développé plus loin ).

Pour les deux variantes le signal de sortie (S1Dout ou S2Dout) est ensuite traité par une unité de traitement UT qui numérise le signal de sortie et effectue un traitement numérique sur ce signal.

Dans la première variante (deux photodétecteurs), l'emploi de deux photodétecteurs équilibrés permet d'enlever un artéfact sur la fonction de distribution, qui est présent sur le résultat du calcul à partir de S2Dout de la deuxième variante (voir plus loin). Cela simplifie donc l'interprétation du résultat.

Selon un mode de réalisation l'interféromètre est de type Mach-Zender, tel qu'illustré sur les figures 1 et 2. Selon un autre mode de réalisation l'interféromètre est de type Sagnac.

Les inventeurs ont montré que l'on remonte à une fonction de distribution des modulations d'intensité de la source laser à partir de différentes valeurs du signal de sortie (S1out ou S2out), déterminées pour une pluralité d'intensités moyennes ou pour une pluralité de valeurs de (g1,g2) multipliés par un même facteur (voir plus loin).

Différentes intensité moyennes sont obtenues en modifiant la puissance moyenne Pm d'entrée du faisceau initial. En effet, une modification d'une puissance moyenne Pm = <P>t de la source revient à modifier une intensité moyenne <I>t , car ces deux grandeurs sont proportionnelles:
${\left〈I\right〉}_{t} = Pm / \left({πD}^{2}/4\right) ,$
avec D diamètre du faisceau.

Le dispositif selon l'invention permet ainsi de reconstruire la fonction de distribution des modulations de la source photonique en se basant sur deux photodétecteurs équilibrés ou un photodétecteur, et ce quelque soit le ratio entre la durée de ces fluctuations d'intensité et le temps de réponse t_{R} des photodétecteurs. Cela constitue un avantage majeur par rapport à l'état de l'art basé sur la mesure directe des modulations d'intensité par une chaîne électronique.

On récrit l'intensité :
$I \left(t\right) = {\left〈I\right〉}_{t .} ⋅ i \left(t\right)$ (2)
où <I>t est l'intensité moyenne de la source, supposée constante dans le temps et i(t) est une variable aléatoire sans dimension. Caractériser les modulations temporelles de l'intensité I(t) revient à reconstruire les fluctuations de la variable aléatoire i(t) autour de 1. On a également <i>t = 1

Un interféromètre non-linéaire tel que le Mach-Zehnder des figures 1 et 2, ou encore un interféromètre Sagnac, possède une fonction de transmission qui dépend de la phase non-linéaire générée dans ses bras, elle-même dépendant de l'intensité circulant dans ces mêmes bras. De manière générale, cette différence de phase non-linéaire peut ainsi s'écrire :
${Δφ}_{12} = {C}_{NL .} I \left(t\right)$ (3)
où la constante *C*_{NL} ne dépend que des paramètres physiques de l'interféromètre et non du signal optique qui le traverse. La constante C_{NL} caractérise la capacité de l'interféromètre à créer une différence de phase non-linéaire entre les deux bras.

On peut donc récrire les intensités des faisceaux Fsin et Fcos en sortie des bras Osin et Ocos comme :
$\begin{matrix}{I}_{s} \left(t\right) = gI \left(t\right) {sin}^{2} \frac{Δ {φ}_{12}}{2} = g {\left〈I\right〉}_{t} {sin}^{2} \left(παi\left(t\right)\right) ⋅ i \left(t\right) , \\ {I}_{c} \left(t\right) = gI \left(t\right) {cos}^{2} \frac{Δ {φ}_{12}}{2} = g {\left〈I\right〉}_{t} {cos}^{2} \left(παi\left(t\right)\right) ⋅ i \left(t\right) ,\end{matrix}$ (4)
avec le paramètre α définit par:
$α = \left({C}_{NL}/2.π\right) . {\left〈I\right〉}_{t}$ (5)

La réponse en courant à une intensité optique Is(t) d'un photodétecteur peut s'écrire :
${A}_{s} \left(t\right) = {K}_{s} {\int }_{0}^{+ ∞} {h}_{s} \left(τ\right) {I}_{s} \left(t-τ\right) d τ .$

Avec :
hs : fonction adimensionnelle qualifiée de réponse impulsionnelle du photodétecteur,
Ks : facteur de proportionnalité représentant la conversion intensité optique (proportionnelle à une puissance optique) - courant de ce photodétecteur.
As correspond au signal de sortie sinus Ssin.

La valeur moyenne temporelle de As sur l'intervalle de temps [*t, t* = *T*] s'écrit :
$\begin{matrix}{A}_{s , moy} \left(t, T\right) = \frac{{K}_{s} {\left〈I\right〉}_{t}}{T} {\int }_{t}^{t + T} d t ′ {\int }_{0}^{+ ∞} {h}_{s} \left(τ\right) {sin}^{2} \left(παi\left(t′-τ\right)\right) ⋅ i \left(t′-τ\right) d τ \\ = \frac{{K}_{s} {\left〈I\right〉}_{t}}{T} {\int }_{0}^{+ ∞} {h}_{s} \left(τ\right) d τ {\int }_{t}^{t + T} {sin}^{2} \left(παi\left(t′-τ\right)\right) ⋅ i \left(t′-τ\right) d t ′ ,\end{matrix}$ (6)

De même la réponse en courant pour l'intensité optique Ic(t) s'écrit : ${A}_{c , moy} \left(t, T\right) = \frac{{K}_{c} {\left〈I\right〉}_{t}}{T} {\int }_{0}^{+ ∞} {h}_{c} \left(τ\right) d τ {\int }_{t}^{t + T} {cos}^{2} \left(παi\left(t′-τ\right)\right) ⋅ i \left(t′-τ\right) d t ′ .$ (7)

Ac correspond au signal de sortie cosinus Scos.

L'unité de traitement UT est configurée pour déterminer la fonction de distribution p(i) des modulations d'intensité de la source laser (voir formule (2)), à partir des signaux As et Ac issus des photodétecteurs, comme expliqué ci-dessous.

Nommons *t*_{coh} le temps de cohérence du champ de la source injectée dans l'interféromètre non-linéaire. On suppose que sa puissance instantanée *P*(*t)* et, par proportionnalité, *I*(*t)* est une variable aléatoire ergodique (du premier ordre) : sur un temps long devant son temps d'auto-corrélation égal à *t*_{coh}, elle réalise toutes ses occurrences possibles et tous ses moments statistiques, et sa moyenne temporelle 〈·〉*ₜ* tend vers sa moyenne d'ensemble 〈·〉. Cette hypothèse d'ergodicité est classique et très couramment satisfaite dans le traitement des variables physiques aléatoires invariantes dans le temps (ie, les propriétés statistiques de la variable ne dépendent pas de l'instant à partir duquel elle est observée).

La méthode de reconstruction mise en œuvre par l'unité de traitement UT tire parti de cette ergodicité au premier ordre de l'intensité instantanée de la source photonique.

L'hypothèse d'ergodicité apporte deux modifications essentielles aux expressions (6) et (7) si l'on considère le cas *T >> t*_{coh}.

D'une part, *As* et *Ac* deviennent invariants par rapport au temps initial de la mesure, *t*:
${A}_{s , moy} \left(t, T\right) = {A}_{s , moy} \left(T\right) ,$ ${A}_{c , moy} \left(t, T\right) = {A}_{c , moy} \left(T\right) .$

D'autre part, l'intégrale temporelle sur *t'* tend vers la moyenne d'ensemble de l'intégrande (considéré comme une variable aléatoire). Pour les mêmes raisons on identifie donc 〈*I*〉*ₜ* = 〈*I*〉.

Enfin, par définition d'une fonction de réponse impulsionnelle :
$\int {h}_{s , c} \left(τ\right) d τ = 1 .$

Sous ces hypothèses (facilement satisfaites) on obtient ainsi pour le courant moyen de chaque photodétecteur une fonction invariable dans le temps et ne dépendant que du paramètre *α:*
${A}_{s} \left(α\right) = {gK}_{s} \left〈I\right〉 {\int }_{i > 0} {sin}^{2} \left(παi\right) ⋅ i ⋅ p \left(i\right) d i$ (8) ${A}_{c} \left(α\right) = {gK}_{c} \left〈I\right〉 {\int }_{i > 0} {cos}^{2} \left(παi\right) ⋅ i ⋅ p \left(i\right) d i$ (9)

On voit bien via les expressions (8) et (9) que les signaux issus des photodétecteurs ne dépendent que de α définit par :
$α = \left({C}_{NL}/2.π\right) . \left〈I\right〉 ,$
avec p(i) fonction de distribution de la variable aléatoire i(t), reliée à l'intensité I(t) émise par la source par (voir formule (2) et <I>t = <I> ):
$I \left(t\right) = \left〈I\right〉 . ⋅ i \left(t\right)$

A noter que les définitions des signaux As et Ac et des variables issues de ces signaux, sont données à titre d'exemple. Le raisonnement reste valide en prenant pour signaux de départ n'importe quelle grandeur physique (puis numérique) représentative de la réponse en courant des photodiodes.

Dans le cas de deux photodiodes équilibrées, le constructeur assure Ks = Kc = K. Par égalité trigonométrique cos²θ - sin²θ = cos2θ, on peut écrire le courant différentiel As(α) - Ac(α) (correspondant au signal SD1out) sous la forme normalisée A(α) suivante:
$A \left(α\right) = 2 ⋅ \frac{{A}_{c} \left(α\right) - {A}_{s} \left(α\right)}{gK \left〈I\right〉} = 2 {\int }_{i > 0} cos \left(2παi\right) ⋅ i ⋅ p \left(i\right) d i$ (10)

On peut mathématiquement prolonger la fonction |i|.p(i) sur l'ouvert i < 0 de manière à ce que cette fonction soit paire (en imposant p(-i) = p(i)). Dès lors, l'équation (10) fait apparaître A(α) comme la transformée de Fourier en cosinus Fc de la fonction |i|.p(i) :
$A \left(α\right) = {\int }_{- ∞}^{+ ∞} cos \left(2παi\right) ⋅ \left|i\right| ⋅ p \left(i\right) d i = {F}_{c} \left[\left|i\right|⋅p\left(i\right)\right]$ (11)

Notons qu'il ne s'agit pas d'une transformée de Fourier en temps mais bien en intensité adimensionnée. On obtient en intégrant l'expression (11) :
$\begin{matrix}B \left(α\right) = {\int }_{0}^{α} A \left(α′\right) d α ′ \\ = \frac{1}{2 π} {\int }_{- ∞}^{+ ∞} \frac{\left|i\right|}{i} sin \left(2παi\right) ⋅ p \left(i\right) d i\end{matrix}$

Soit :
$B \left(α\right) = \frac{1}{2 π} {\int }_{- ∞}^{+ ∞} sin \left(2παi\right) ⋅ sgn \left(i\right) ⋅ p \left(i\right) d i$ (12)

Avec sgn(i) = i/|i| et sgn(0) = 0.

Grâce à cette méthode, on obtient sgn(i).p(i) en effectuant la transformée de Fourier en sinus inverse de B(α) :
$sgn \left(i\right) ⋅ p \left(i\right) = {F}_{s}^{- 1} \left[B\left(α\right)\right] .$ (13)

De manière pratique sgn(i).p(i) est reconstruite par transformée de Fourier discrète sur une largeur spectrale finie.

Ainsi l'unité de traitement UT est configurée pour déterminer la fonction de distribution p(i) des modulations d'intensité de la source laser à partir du signal de sortie S1Dout.

Selon un mode de réalisation l'unité de traitement est configurée pour déterminer une fonction A associant au paramètre α, fonction des différentes valeurs d'intensités moyennes ou de gains, une valeur déterminée à partir du signal de sortie associé, et pour déterminer, à partir des valeurs de la fonction A(α) déterminées pour une pluralité de valeurs de α, la grandeur p(i), densité de probabilité de la variable aléatoire i. Le paramètre α a été défini au §94 par une formule, donnée à titre d'exemple. Mais ce paramètre α est un paramètre qui peut être librement fixé, à une constante multiplicative près : le paramètre choisi est proportionnel au produit de C_{NL}.<I>, c'est-à-dire au produit d'une constante (C_{NL}) représentative de la phase non linéaire créée par l'interféromètre et de l'intensité moyenne de la source.

Pratiquement pour obtenir A(α) pour une pluralité de valeurs de α, on fait varier la puissance moyenne de la source laser Pm, ce qui revient à faire varier l'intensité moyenne (voir formule 1bis), ou on fait varier la valeur du premier et du deuxième gain (g1, g2), ou de g lorsque g1=g2 (C_{N} dépend entre autre des gains de l'interféromètre). Lorsque g1 est différent de g2 il convient de faire varier g1 et g2 selon un même facteur multiplicatif.

Les différentes valeurs de A(α) sont obtenues à partir du signal SD1out numérisé et normalisé selon la formule (10).

Comme décrit précédemment selon un mode de réalisation l'unité de traitement est configurée pour déterminer p(i) à partir de la fonction A(α), en calculant l'intégrale B(α) de A(α), puis en réalisant une transformée de Fourrier inverse de B(α) (formule 13).

Il est également possible de déterminer p(i) directement à partir de A(α), qui représente la transformée de Fourrier de i.p(i) (voir formule 11). Pour cela on réalise la transformée de Fourrier inverse de A et on divise par i cette transformée de Fourrier inverse pour retrouver p(i), sauf en i=0.

Selon un mode de réalisation le paramètre α est égale à : $α = \left({C}_{NL}/2.π\right) . {\left〈I\right〉}_{t}$
avec Δφ₁₂ = C_{NL}.I(t) et Δφ₁₂ phase non linéaire de l'interféromètre (voir formules (3) et (5)).

Les calculs ci-dessus ont été réalisés pour des photodétecteurs équilibrés. Mais cette condition n'est pas nécessaire pour déterminer p(i).

Pour passer des expressions (8) et (9) à l'expression (10), il est nécessaire que les photodiodes soient correctement équilibrées. Un pouvoir de rejet du mode commun (CMR pour « common-mode rejection ») fini peut se définir comme :
$K = \frac{{K}_{s} + {K}_{c}}{2} , Δ K = \frac{{K}_{c} - {K}_{s}}{2} , {η}_{CMR} = \frac{Δ K}{K}$ (14)

Le cas idéal de 2 photodiodes équilibrées, développé plus haut, est ainsi représenté par le cas η_{CMR} = 0. À l'inverse, le cas d'une seule photodiode est représenté par Ks = 0 ou de manière identique Kc = 0, soit in fine dans les deux cas η_{CMR} = 1.

A partir des formules (8) et (9) on obtient :
$\begin{matrix}{A}_{c} \left(α\right) - {A}_{s} \left(α\right) = g \left(K+ΔK\right) \left〈I\right〉 \int {cos}^{2} \left(παi\right) ⋅ i ⋅ p \left(i\right) d i \\ - g \left(K-ΔK\right) \left〈I\right〉 \int {sin}^{2} \left(παi\right) ⋅ i ⋅ p \left(i\right) d i\end{matrix}$

Soit une valeur du courant différentiel normalisé de : $\begin{matrix}\frac{{A}_{c} \left(α\right) - {A}_{s} \left(α\right)}{gK \left〈I\right〉} = \int cos \left(2παi\right) ⋅ i ⋅ p \left(i\right) d i \\ + {η}_{CMR} \int i ⋅ p \left(i\right) d i\end{matrix}$

Comme p est la densité de probabilité de la variable aléatoire i, on a par définition intégrale de i p(i)di = (i) = 1. Ainsi :
$A \left(α\right) = \frac{{A}_{c} \left(α\right) - {A}_{s} \left(α\right)}{gK \left〈I\right〉} = \int cos \left(παi\right) ⋅ i ⋅ p \left(i\right) d i + {η}_{CMR}$ (15)

et après intégration entre 0 et α :
$B \left(α\right) = \frac{1}{2 π} = \int sin \left(2παi\right) ⋅ sgn \left(i\right) ⋅ p \left(i\right) d i + {η}_{CMR} α$ (16)

L'expression (12) se trouve transformée, pour i>0, en :
$B \left(α\right) = {F}_{s} \left[p\left(i\right)\right] + {η}_{CMR} , soit {F}_{s}^{- 1} \left[{A}_{cross}\left(α\right)\right] = p \left(i\right) + \frac{{η}_{CMR}}{{\left(2πi\right)}^{2}} ,$ (17)

On ajoute donc au signal p(i) un signal divergeant lorsque i tend vers zéro. Physiquement, cette divergence ne pose pas de problème pour les petites valeurs de η_{CMR}, mais devient non négligeable pour les valeurs importantes et a fortiori pour la deuxième variante à une seule photodiode correspondant à η_{CMR} = 1.

Pour contourner ce problème mathématico-numérique, on peut introduire la valeur A(α = 0), obtenue par exemple en baissant (I) (cf. définition de α en Eq. 5) tout en restant dans la dynamique et au-dessus du niveau de bruit de la (des) photodiode(s) utilisée(s). Le but est d'obtenir une mesure où la phase non-linéaire enregistrée devient négligeable. En considérant alors l'expression (15), on trouve :
$A \left(α=0\right) = \int i ⋅ p \left(i\right) d i + {η}_{CMR} = 1 + {η}_{CMR}$

Numériquement, il convient alors de renormaliser le signal physique enregistré, dont l'amplitude importe peu, et qui dépend de g, K et 〈I〉, pour que sa valeur-limite en 0 soit bien égale à 1 + η_{CMR}. On Nomme Aᵣₑₙₒᵣₘ(α) ce signal numérique renormalisé. Dès lors, en utilisant en lieu et place de A(α) le signal numérique A*(α) = Aᵣₑₙₒᵣₘ(α) - η_{CMR} dans les calculs ci-dessus, on trouve une nouvelle variable B*(α) par intégration entre 0 et α:
$B * \left(α\right) = \frac{1}{2 π} \int sin \left(2παi\right) ⋅ sgn \left(i\right) ⋅ p \left(i\right) d i = {F}_{s} \left[p\left(i\right)\right]$ (18)

Avec cette variable B* on élimine ainsi le signal parasite divergeant.

Notons que dans le cas de deux photodiodes non-balancées (0 < η_{CMR} < 1), il est facile de mesurer η_{CMR} par une méthode annexe et bien connue de l'homme de l'art, ce qui permet toujours d'effectuer la renormalisation.

Dans le cas d'une seule photodiode (deuxième variante), on prend η_{CMR} = 1.

Il est ainsi toujours possible (cas un ou deux photodétecteurs balancés ou non) de déterminer p(i) à partir du signal de sortie SD1 out (première variante) ou SD2out (deuxième variante), en déterminant une fonction normalisée calculée à partir des valeurs de ces signaux de sortie numérisés.

Le dispositif revendiqué permet de caractériser les modulations temporelles d'une source laser continue ou impulsionnelle, et dont les variations ne sont pas nécessairement aléatoires. Toute source présentant des modulations autour de sa puissance moyenne peut être analysée par le dispositif selon l'invention.

Selon un mode de réalisation l'interféromètre est en espace libre.

Selon un autre mode de réalisation l'interféromètre est fibré, et le premier milieu non linéaire est une première fibre optique non linéaire FONL1, le deuxième milieu non linéaire est une deuxième fibre optique non linéaire FONL2 et les première et deuxième phases non linéaires sont générées par effet Kerr.

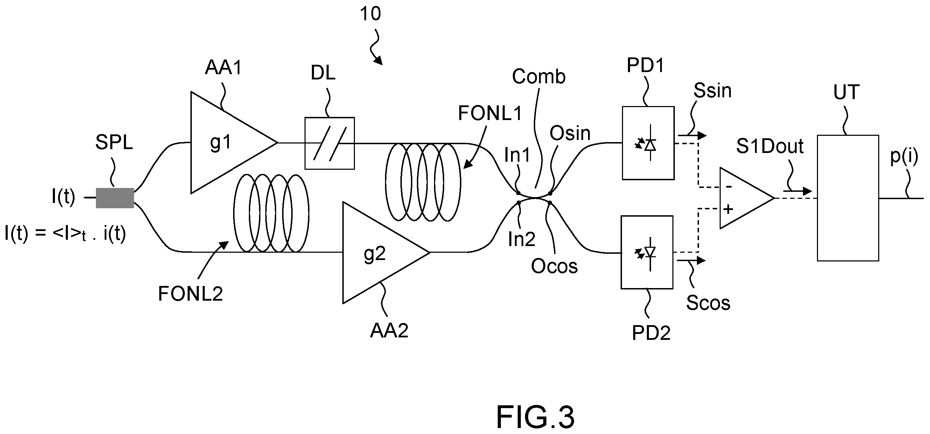

La figure 3 illustre un exemple d'implémentation d'un dispositif 10 selon l'invention selon la première variante, comprenant un interféromètre fibré de type Mach-Zender, avec une fibre non linéaire FONL1 sur le premier bras et une fibre non linéaire FONL2 sur le deuxième bras.

Chaque fibre optique est caractérisée par une longueur (ℓ1, ℓ2) et un indice non linéaire n2(1) et n2(2). L'utilisation de fibres optiques comme milieu non linéaire permet d'obtenir une intensité lumineuse concentrée, plus efficace pour générer des effets non linéaires dans les milieux non linéaires (grande longueur de guidage, petite taille du cœur).

Préférentiellement les phases non linéaires φ_{NL1} et φ_{NL2} sont générées par effet Kerr dans les fibres optiques FONL1 et FONL2.

L'accumulation de phase optique φ_{NL} non linéaire d'ordre 2 par effet Kerr, dans un milieu non-linéaire de longueur l et d'indice réfractif n2, pour une onde optique d'intensité J(t) et de longueur d'onde λ₀, vaut :
${φ}_{NL} = \frac{{πn}_{2} l}{{λ}_{0}} ⋅ J \left(t\right) .$

Pour simplifier la réalisation de l'interféromètre selon un mode de réalisation on choisit deux milieux non linéaires identiques, ce qui se traduit pour un interféromètre fibré par deux fibres FONL1 et FONL2 présentant une même longueur ℓ et un même indice non linéaire n2 :
$l 1 = l 2 = l ; n 2 \left(1\right) = n 2 \left(2\right) = n 2$

Cependant chaque fibre peut avoir une longueur et un indice de réfraction non linéaire n2 différent sans que cela change le sens des calculs.

On peut également choisir de manière non limitative pour simplifier les calculs :
$k = 0.5 et g 1 = g 2 = g / 2$

On a alors :
$\frac{Δ {φ}_{12}}{2} = \frac{{πn}_{2} l}{4 {λ}_{0}} \left(g-1\right) I \left(t\right) .$ (19)

Soit un facteur C_{N} :
${C}_{NL} = \left[π.\left(g-1\right){n}_{2}.l\right] / {λ}_{0}$ (20)
avec g gain de l'interféromètre, n₂ indice non linéaire de chacune des fibres optiques et *l* longueur de chacune des fibres optiques.

A noter qu'un interféromètre dit non linéaire de type Mach-Zender fibré, générant une phase non linéaire, est décrit dans la publication de Marion et al « Control of nonlinear processes using versatile random photonic sources : application to the energy depostion in a dielectric material », Phys. Rev. A 105, 013525 (2022). Dans cette publication l'interféromètre non linéaire est utilisé pour une tout autre application que dans l'invention. Dans cette publication l'interféromètre non linéaire est utilisé comme filtre pour sélectionner des pics d'intensité lorsqu'une source de bruit photonique est injectée en entrée. Les sorties de l'interféromètre sont branchées (virtuellement car il s'agit de simulations) sur des amplificateurs et une application finale. Dans l'application décrite, on utilise les sorties amplifiées de l'interféromètre pour réaliser de l'usinage laser.

Selon un mode de réalisation chaque bras comprend un correcteur de dispersion DC1, DC2. L'intérêt est de ne pas dégrader le calcul de p(i).

Selon un autre aspect l'invention concerne une méthode de caractérisation des modulations temporelles d'une intensité I(t) provenant d'une source laser LS.

Une première variante de la méthode 15 utilise un interféromètre INT comprenant un séparateur SPL, un premier bras comprenant un premier milieu non linéaire NLM1 et un deuxième bras comprenant un deuxième milieu non linéaire NLM2. Le premier bras comprend un premier amplificateur ou atténuateur AA1 présentant un premier gain g1 et le deuxième bras comprend un deuxième amplificateur ou atténuateur AA2 présentant un deuxième gain g2. Le premier et le deuxième amplificateurs ou atténuateurs sont agencés de sorte qu'une première intensité incidente sur le premier milieu non linéaire est différente d'une deuxième intensité incidente sur le deuxième milieu non linéaire, de manière à générer une première phase non linéaire φ_{NL1} différente d'une deuxième phase φ_{NL2} non linéaire, une différence entre la deuxième phase non linéaire et la première phase non linéaire étant dénommée phase non linéaire Δφ₁₂ de l'interféromètre. L'interféromètre comprend également un combineur Comb configuré pour superposer un premier faisceau lumineux issu du premier bras et un deuxième faisceau lumineux issu du deuxième bras et comprenant deux sorties, une sortie dénommée sortie sinus Osin et une sortie dénommée sortie cosinus Ocos.

La méthode 15 comprend les étapes consistant à :
- Générer (100) un faisceau incident présentant l'intensité (I(t)) à caractériser,
- Injecter (200) ledit faisceau incident dans l'interféromètre,
- Détecter (300) un signal de sortie sinus (Ssin) et un signal de sortie cosinus (Scos) et générer un signal de sortie (S1Dout) à partir d'une différence entre le signal de sortie sinus (Ssin) et le signal de sortie cosinus (Scos), le signal de sortie (S1Dout) étant fonction de ladite phase non linéaire (Δφ₁₂),
- Déterminer (400) une fonction de distribution (p(i)) desdites modulations d'intensité de ladite source laser à partir dudit signal de sortie (S1Dout) déterminé pour une pluralité d'intensités moyennes de la dite source laser ou pour une pluralité de valeurs du premier et du deuxième gain, le premier et le deuxième gain variant selon un même facteur multiplicatif.

Une deuxième variante de méthode 25 de caractérisation des modulations temporelles d'une intensité I(t) provenant d'une source laser LS utilise également un interféromètre INT tel que décrit précédemment.

La deuxième variante de la méthode comprend les étapes consistant à :
- Générer (100) un faisceau incident présentant l'intensité (I(t)) à caractériser,
- Injecter (200) ledit faisceau incident dans ledit interféromètre,
- Détecter (300), à une sortie dudit interféromètre choisie parmi la sortie sinus ou la sortie cosinus, un signal de sortie (S2Dout) fonction de ladite phase non linéaire (Δφ₁₂),
- Déterminer (400) une fonction de distribution (p(i)) desdites modulations d'intensité de ladite source laser à partir dudit signal de sortie (S2Dout) déterminé pour une pluralité d'intensités moyennes de la dite source laser ou pour une pluralité de valeurs du premier et du deuxième gain, le premier et le deuxième gain variant selon un même facteur multiplicatif.

Selon un mode de réalisation commun aux deux variantes (15, 25), l'intensité I(t) à caractériser s'écrit :
$I \left(t\right) = {\left〈I\right〉}_{t} . i \left(t\right)$
avec:
<I>t intensité moyenne de la source, constante dans le temps,
i(t) variable aléatoire sans dimension.

L'étape (400) de détermination de la fonction de distribution comprend les sous étapes consistant à :
- déterminer une fonction (A, A*) associant à un paramètre α, fonction des différentes valeurs d'intensités moyennes ou de gains, une valeur déterminée à partir du signal de sortie associé, et
- déterminer, à partir des valeurs de ladite fonction obtenues pour une pluralité de valeurs de α, une grandeur p(i), densité de probabilité de la variable aléatoire i.

## Revendications

1. Dispositif (10) de caractérisation des modulations temporelles d'une intensité (I(t)) provenant d'une source laser (LS), comprenant :
- un interféromètre (INT) comprenant :
• un séparateur (SPL),
• un premier bras comprenant un premier milieu non linéaire (NLM1) et un deuxième bras comprenant un deuxième milieu non linéaire (NLM2),
le premier bras comprenant un premier amplificateur ou atténuateur (AA1) présentant un premier gain (g1) et le deuxième bras comprenant un deuxième amplificateur ou atténuateur (AA2) présentant un deuxième gain (g2), le premier et le deuxième amplificateurs ou atténuateurs étant agencés de sorte qu'une première intensité incidente sur le premier milieu non linéaire est différente d'une deuxième intensité incidente sur le deuxième milieu non linéaire, de manière à générer une première phase non linéaire (φ_{NL1}) différente d'une deuxième phase non linéaire (φ_{NL2}), une différence entre la deuxième phase non linéaire et la première phase non linéaire étant dénommée phase non linéaire (Δφ₁₂) dudit interféromètre,
• un combineur (Comb) configuré pour superposer un premier faisceau lumineux (F1) issu du premier bras et un deuxième faisceau lumineux (F2) issu du deuxième bras et comprenant deux sorties, une sortie dénommée sortie sinus (Osin) et une sortie dénommée sortie cosinus (Ocos),
- un premier photodétecteur (PD1) couplé à la sortie sinus (Osin) dudit combineur et un deuxième détecteur (PD2) couplé à la sortie cosinus (Ocos) dudit combineur, générant respectivement un signal de sortie sinus (Ssin) et un signal de sortie cosinus (Scos), le premier et deuxième détecteurs étant configurés de manière à générer un signal de sortie (S1Dout) à partir d'une différence entre le signal de sortie sinus (Ssin) et le signal de sortie cosinus (Scos), le signal de sortie (S1Dout) étant fonction de ladite phase non linéaire (Δφ₁₂),
- une unité de traitement (UT) configurée pour déterminer une fonction de distribution (p(i)) desdites modulations d'intensité de ladite source laser à partir dudit signal de sortie (S1Dout), déterminé pour une pluralité d'intensités moyennes de la dite source laser ou pour une pluralité de valeurs du premier et du deuxième gain, le premier et le deuxième gain variant selon un même facteur multiplicatif.

2. Dispositif (20) de caractérisation des modulations temporelles d'une intensité (I(t)) provenant d'une source laser (LS), comprenant :
- un interféromètre (INT) comprenant :
• un séparateur (SPL),
• un premier bras comprenant un premier milieu non linéaire (NLM1) et un deuxième bras comprenant un deuxième milieu non linéaire (NLM2),
le premier bras comprenant un premier amplificateur ou atténuateur (AA1) présentant un premier gain (g1) et le deuxième bras comprenant un deuxième amplificateur ou atténuateur (AA2) présentant un deuxième gain (g2), le premier et le deuxième amplificateurs ou atténuateurs étant agencés de sorte qu'une première intensité incidente sur le premier milieu non linéaire est différente d'une deuxième intensité incidente sur le deuxième milieu non linéaire, de manière à générer une première phase non linéaire (φ_{NL1}) différente d'une deuxième phase (φ_{NL2}) non linéaire, une différence entre la deuxième phase non linéaire et la première phase non linéaire étant dénommée phase non linéaire (Δφ₁₂) dudit interféromètre,
• un combineur (Comb) configuré pour superposer un premier faisceau lumineux issu du premier bras et un deuxième faisceau lumineux issu du deuxième bras et comprenant deux sorties, une sortie dénommée sortie sinus (Osin) et une sortie dénommée sortie cosinus (Ocos),
- un photodétecteur (PD) couplé à une sortie choisie parmi la sortie sinus ou la sortie cosinus, et configuré pour générer un signal de sortie (S2Dout) fonction de ladite phase non linéaire (Δφ₁₂),
- une unité de traitement (UT) configurée pour déterminer une fonction de distribution (p(i)) desdites modulations d'intensité de ladite source laser à partir dudit signal de sortie (S2Dout) déterminé pour une pluralité d'intensités moyennes de la dite source laser ou pour une pluralité de valeurs du premier et du deuxième gain, le premier et le deuxième gain variant selon un même facteur multiplicatif.

3. Dispositif selon l'une des revendications précédentes dans lequel l'intensité I(t) à caractériser s'écrit : $I \left(t\right) = {\left〈I\right〉}_{t} . i \left(t\right)$ avec:
<I>t intensité moyenne de la source, constante dans le temps,
i(t) variable aléatoire sans dimension,
et dans lequel l'unité de traitement (UT) est configurée pour :
- déterminer une fonction (A, A*) associant à un paramètre α, fonction des différentes valeurs d'intensités moyennes ou de gains, une valeur déterminée à partir du signal de sortie associé, et
- déterminer, à partir des valeurs de ladite fonction obtenues pour une pluralité de valeurs de α, une grandeur p(i), densité de probabilité de la variable aléatoire i.

4. Dispositif selon la revendication précédente dans lequel le paramètre α est égal à : $α = \left({C}_{NL}/2.π\right) . {\left〈I\right〉}_{t}$ avec Δφ₁₂ = C_{NL}.I(t) et Δφ₁₂ phase non linéaire de l'interféromètre.

5. Dispositif selon l'une des revendications précédentes dans lequel l'interféromètre est de type fibré, le premier et le deuxième milieu non linéaires étant respectivement une première (FONL1) et une deuxième (FONL2) fibre optique non linéaire, lesdites première et deuxième phase non linéaires étant générées par effet Kerr.

6. Dispositif selon les revendications 4 et 5 dans lequel la première (FONL1) et la deuxième (FONL2) fibre optique non linéaire sont identiques, et dans lequel le premier gain et le deuxième gain sont identiques, et dans lequel on a : ${C}_{NL} = \left[π.\left(g-1\right){n}_{2}.l\right] / {λ}_{0}$ avec g gain, n₂ indice non linéaire de chacune des fibres optiques et *l* longueur de chacune des fibres optiques.

7. Dispositif selon l'une des revendications précédentes dans lequel le séparateur (SPL), le premier (g1) et le deuxième (g2) gain sont déterminés de sorte qu'une première intensité lumineuse (11) en sortie du premier bras et une deuxième intensité lumineuse (I2) en sortie du deuxième bras présentent une amplitude identique.

8. Dispositif selon la revendication précédente dans lequel le séparateur est de type 50/50 et dans lequel le premier et le deuxième gain sont sensiblement identiques.

9. Dispositif selon l'une des revendications précédentes dans lequel un chemin optique du premier bras et égal à un chemin optique du deuxième bras.

10. Dispositif selon l'une des revendications précédentes dans lequel au moins un des deux bras comprend une ligne à retard (DL).

11. Dispositif selon l'une des revendications précédentes dans lequel l'interféromètre est de type Mach-Zender ou de type Sagnac.

12. Dispositif selon la revendication précédente dans lequel chaque bras comprend un correcteur de dispersion (DC1, DC2).

13. Méthode (15) de caractérisation des modulations temporelles d'une intensité (I(t)) provenant d'une source laser (LS),
ladite méthode utilisant un interféromètre (INT) comprenant :
• un séparateur (SPL),
• un premier bras comprenant un premier milieu non linéaire (NLM1) et un deuxième bras comprenant un deuxième milieu non linéaire (NLM2),
le premier bras comprenant un premier amplificateur ou atténuateur (AA1) présentant un premier gain (g1) et le deuxième bras comprenant un deuxième amplificateur ou atténuateur (AA2) présentant un deuxième gain (g2), le premier et le deuxième amplificateurs ou atténuateurs étant agencés de sorte qu'une première intensité incidente sur le premier milieu non linéaire est différente d'une deuxième intensité incidente sur le deuxième milieu non linéaire, de manière à générer une première phase non linéaire (φ_{NL1}) différente d'une deuxième phase (φ_{NL2}) non linéaire, une différence entre la deuxième phase non linéaire et la première phase non linéaire étant dénommée phase non linéaire (Δφ₁₂) dudit interféromètre,
• un combineur (Comb) configuré pour superposer un premier faisceau lumineux issu du premier bras et un deuxième faisceau lumineux issu du deuxième bras et comprenant deux sorties, une sortie dénommée sortie sinus (Osin) et une sortie dénommée sortie cosinus (Ocos),
ladite méthode comprenant les étapes consistant à :
- Générer (100) un faisceau incident présentant l'intensité (I(t)) à caractériser,
- Injecter (200) ledit faisceau incident dans l'interféromètre,
- Détecter (300) un signal de sortie sinus (Ssin) et un signal de sortie cosinus (Scos) et générer un signal de sortie (S1Dout) à partir d'une différence entre le signal de sortie sinus (Ssin) et le signal de sortie cosinus (Scos), le signal de sortie (S1Dout) étant fonction de ladite phase non linéaire (Δφ₁₂),
- Déterminer (400) une fonction de distribution (p(i)) desdites modulations d'intensité de ladite source laser à partir dudit signal de sortie (S1Dout) déterminé pour une pluralité d'intensités moyennes de la dite source laser ou pour une pluralité de valeurs du premier et du deuxième gain, le premier et le deuxième gain variant selon un même facteur multiplicatif.

14. Méthode (25) de caractérisation des modulations temporelles d'une intensité (I(t)) provenant d'une source laser (LS),
ladite méthode utilisant un interféromètre (INT) comprenant :
• un séparateur (SPL),
• un premier bras comprenant un premier milieu non linéaire (NLM1) et un deuxième bras comprenant un deuxième milieu non linéaire (NLM2),
le premier bras comprenant un premier amplificateur ou atténuateur (AA1) présentant un premier gain (g1) et le deuxième bras comprenant un deuxième amplificateur ou atténuateur (AA2) présentant un deuxième gain (g2), le premier et le deuxième amplificateurs ou atténuateurs étant agencés de sorte qu'une première intensité incidente sur le premier milieu non linéaire est différente d'une deuxième intensité incidente sur le deuxième milieu non linéaire, de manière à générer une première phase non linéaire (φ_{NL1}) différente d'une deuxième phase (φ_{NL2}) non linéaire, une différence entre la deuxième phase non linéaire et la première phase non linéaire étant dénommée phase non linéaire (Δφ₁₂) dudit interféromètre,
• un combineur (Comb) configuré pour superposer un premier faisceau lumineux issu du premier bras et un deuxième faisceau lumineux issu du deuxième bras et comprenant deux sorties, une sortie dénommée sortie sinus (Osin) et une sortie dénommée sortie cosinus (Ocos),
ladite méthode comprenant les étapes consistant à :
- Générer (100) un faisceau incident présentant l'intensité (I(t)) à caractériser,
- Injecter (200) ledit faisceau incident dans ledit interféromètre,
- Détecter (300), à une sortie dudit interféromètre choisie parmi la sortie sinus ou la sortie cosinus, un signal de sortie (S2Dout) fonction de ladite phase non linéaire (Δφ₁₂),
- Déterminer (400) une fonction de distribution (p(i)) desdites modulations d'intensité de ladite source laser à partir dudit signal de sortie (S2Dout) déterminé pour une pluralité d'intensités moyennes de la dite source laser ou pour une pluralité de valeurs du premier et du deuxième gain, le premier et le deuxième gain variant selon un même facteur multiplicatif.

15. Méthode (15, 25) selon l'une des revendications 13 ou 14 dans laquelle l'intensité I(t) à caractériser s'écrit : $I \left(t\right) = {\left〈I\right〉}_{t} . i \left(t\right)$ avec:
<I>t intensité moyenne de la source, constante dans le temps,
i(t) variable aléatoire sans dimension,
et dans laquelle l'étape (400) de détermination de ladite fonction de distribution comprend les sous étapes consistant à :
- déterminer une fonction (A, A*) associant à un paramètre α, fonction des différentes valeurs d'intensités moyennes ou de gains, une valeur déterminée à partir du signal de sortie associé, et
- déterminer, à partir des valeurs de ladite fonction obtenues pour une pluralité de valeurs de α, une grandeur p(i), densité de probabilité de la variable aléatoire i.
